# EUROPEAN PATENT APPLICATION

(11) **EP 4 589 673 A1**
(43) Date of publication of application: **23.07.2025**
(21) Application number: 25152165.4
(22) Date of filing: 16.01.2025
(51) Int. Cl.: H01M 4/04, H01M 4/13, H01M 4/139, H01M 4/62, H01M 10/0525, H01M 4/131, H01M 4/58, H01M 4/02

(54) **POSITIVE ELECTRODES AND RECHARGEABLE LITHIUM BATTERIES INCLUDING THE SAME**

(30) Priority: 19.01.2024 KR 20240009106; 07.01.2025 KR 20250002359
(71) Applicant: SAMSUNG SDI CO., LTD., Yongin-si, Gyeonggi-do 17084 (KR)
(72) Inventor: KANG, Younghye, Gyeonggi-do 17084 (KR); LEE, Minju, Gyeonggi-do 17084 (KR); OH, Songyul, Gyeonggi-do 17084 (KR); LEE, Junsik, Gyeonggi-do 17084 (KR); KO, Donghyun, Gyeonggi-do 17084 (KR); CHOI, Kyuhwan, Gyeonggi-do 17084 (KR); LEE, Boram, Gyeonggi-do 17084 (KR); LEE, Seongsun, Gyeonggi-do 17084 (KR)
(74) Representative: Michalski Hüttermann & Partner Patentanwälte mbB

(57) **Abstract**

Examples of the disclosure include a positive electrode including a current collector; a positive electrode active material layer located on the current collector and including a positive electrode active material and a conductive material, and a conductive layer located as a separate layer inside the positive electrode active material layer and including carbon nanotubes, wherein the conductive material is included in an amount of about 0.01 wt% to about 0.5 wt% based on 100 wt% of the positive electrode active material layer. Examples also include a positive electrode and a rechargeable lithium battery including the same that can maintain high energy density by reducing the content of the conductive material, while maintaining low overall resistance of the electrode plate.

## Description

### BACKGROUND OF THE INVENTION

### (a) Field of the Invention

Positive electrodes, and rechargeable lithium batteries including the positive electrodes, are disclosed.

### (b) Description of the Related Art

A portable information device such as, e.g., a cell phone, a laptop, smart phone, and the like, or an electric vehicle typically uses a rechargeable lithium battery having high energy density and easy portability as a driving power source. Recently, research has been actively conducted to use a rechargeable lithium battery with high energy density as a driving power source or power storage power source for, e.g., hybrid or electric vehicles.

In such a rechargeable lithium battery, an advantage is to lower resistance of an electrode plate included in the rechargeable lithium battery. However, in order to lower the resistance of the electrode plate, electrical conductivity of the electrode plate should be increased by adding a conductive material, wherein when a content of the conductive material is increased, decreasing energy density may occur. Accordingly, maintaining low resistance of the electrode plate while reducing the content of the conductive material is advantageous.

### SUMMARY OF THE INVENTION

Some example embodiments provide a positive electrode that maintains high energy density by reducing the content of the conductive material while maintaining low overall resistance of the electrode plate, and a rechargeable lithium battery including the same.

In some example embodiments, a positive electrode includes a current collector, a positive electrode active material layer located on the current collector and including a positive electrode active material and a conductive material, and a conductive layer located as a separate layer inside the positive electrode active material layer and including carbon nanotubes, wherein the conductive material is included in an amount of ≥ 0.01 wt% to ≤ 0.5 wt% based on 100 wt% of the total positive electrode active material layer.

In some example embodiments, a rechargeable lithium battery includes the positive electrode. a negative electrode. and an electrolyte.

A positive electrode and a rechargeable lithium battery including the same according to some example embodiments can maintain high energy density by reducing the content of the conductive material, while maintaining low overall resistance of the electrode plate.

### BRIEF DESCRIPTION OF THE DRAWINGS

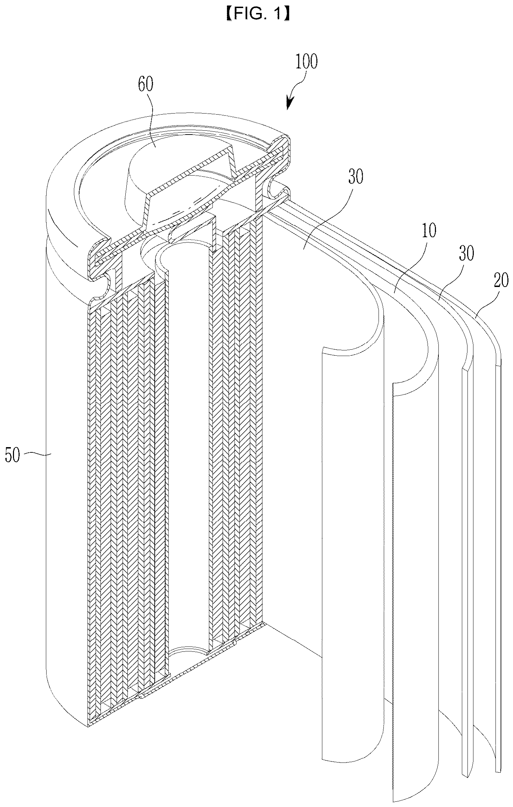

FIGS. 1 to 4 are cross-sectional views schematically showing a rechargeable lithium battery, according to some example embodiments.

### DETAILED DESCRIPTION OF THE EXAMPLE EMBODIMENTS

Hereinafter, example embodiments will be described in detail so that those of ordinary skill in the art can easily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, the element can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

Soft carbon refers to a carbon material that can be graphitized, and is a material that is easily graphitized by heat treatment at a high temperature, for example, about 2800 °C. Hard carbon is a carbon material that cannot be graphitized or is finely graphitized by heat treatment.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

In some example embodiments, a positive electrode includes a current collector, a positive electrode active material layer located on the current collector and including a positive electrode active material and a conductive material, and a conductive layer located as a separate layer inside the positive electrode active material layer and including carbon nanotubes, wherein the conductive material is included in an amount of ≥ 0.01 wt% to ≤ 0.5 wt% based on 100 wt% of the total positive electrode active material layer. Such a positive electrode can achieve high energy density by reducing a content of a conductive material, while maintaining low resistance by increasing electronic conductivity.

### Current Collector

The current collector according to some example embodiments is not particularly limited as long as the current collector is conductive without causing chemical changes in the rechargeable lithium battery, but examples may include aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof, and may contain, for example, aluminum (Al). Herein, the shape of the current collector may be plate-shaped or thin-shaped.

A thickness of the current collector according to some example embodiments may be ≥ 1 µm to ≤ 50 µm, for example ≥ 2 µm to ≤ 40 µm, ≥ 5 µm to ≤ 30 µm, or ≥ 10 µm to ≤ 20 µm in order to ensure current collection in the depth direction of the electrode. Additionally, a tensile strength of the current collector may be ≥ 200 N/mm² to ≤ 1,000 N/mm², for example ≥ 200 N/mm² to ≤ 800 N/mm², > 200 N/mm² to ≤ 600 N/mm², or ≥ 200 N/mm² to ≤ 300 N/mm². When the current collector having a thickness and tensile strength within the above range is included, a strength of the current collector may be improved so that a positive electrode with high density may be manufactured, which increases capacity of the positive electrode.

### Positive Electrode Active Material Layer

The positive electrode active material layer according to some example embodiments includes a positive electrode active material.

The positive electrode active material according to some example embodiments may be or include a compound capable of intercalating and deintercalating lithium (lithiated intercalation compound). For example, one or more types of composite oxides of a metal including at least one of cobalt, manganese, nickel, and a combination thereof and lithium may be used.

The composite oxide may be or include a lithium transition metal composite oxide, and examples thereof may include at least one of lithium nickel-based oxide, lithium cobalt-based oxide, lithium manganese-based oxide, a lithium iron phosphate-based compound, lithium cobalt-free nickel-manganese-based oxide, lithium-manganese rich composite oxide, or a combination thereof.

As an example, a compound represented by any one or more of the following chemical formulas may be used. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above chemical formulas, A is or includes Ni, Co, Mn, or a combination thereof; X is or includes Al, Ni, Co, Mn, Cr, Fe, Mg, Sr, V, a rare earth element, or a combination thereof; D is or includes O, F, S, P, or a combination thereof; G is Al, Cr, Mn, Fe, Mg, La, Ce, Sr, V, or a combination thereof; and L¹ is or includes Mn, Al, or a combination thereof.

The positive electrode active material may include, for example, at least one of lithium nickel-based oxide represented by Chemical Formula 1, lithium cobalt-based oxide represented by Chemical Formula 2, a lithium iron phosphate-based compound represented by Chemical Formula 3, cobalt-free lithium nickel-manganese-based oxide represented by Chemical Formula 4, or a combination thereof.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements including Al, B, Ba, Ca, Ce, Co, Cr, Cu, Fe, Mg, Mn, Mo, Nb, Si, Sn, Sr, Ti, V, W, and Zr, and X is one or more elements including F, P, and S.

In Chemical Formula 1, 0.6≤x1≤1, 0≤y1≤0.4, and 0≤z1≤0.4, or 0.8≤x1≤1, 0≤y1≤0.2, and 0≤z1≤0.2.

[Chemical Formula 2] Liₐ₂COₓ₂M³_{y2}O_{2-b2}X_{b2}

In Chemical Formula 2, 0.9≤a2≤1.8, 0.7≤5x2≤1, 0≤y2≤0.3, 0.9≤x2+y2≤1.1, and 0≤b2≤0.1, M³ is one or more elements including Al, B, Ba, Ca, Ce, Cr, Cu, Fe, Mg, Mn, Mo, Ni, Se, Si, Sn, Sr, Ti, V, W, Y, Zn, and Zr, and X is one or more elements including F, P, and S.

[Chemical Formula 3] Liₐ₃Feₓ₃M⁴_{y3}PO_{4-b3}X_{b3}

In Chemical Formula 3, 0.9≤a3≤1.8, 0.6≤x3≤1, 0≤y3≤0.4, and 0≤b3≤0.1, M⁴ is one or more elements including Al, B, Ba, Ca, Ce, Co, Cr, Cu, Mg, Mn, Mo, Ni, Se, Si, Sn, Sr, Ti, V, W, Y, Zn, and Zr, and X is one or more elements including F, P, and S.

[Chemical Formula 4] Liₐ₄Niₓ₄Mn_{y4}M⁵_{z4}O_{2-b4}X_{b4}

In Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1, M⁵ is one or more elements including Al, B, Ba, Ca, Ce, Cr, Fe, Mg, Mo, Nb, Si, Sn, Sr, Ti, V, W, and Zr, and X is one or more elements including F, P, and S.

As an example, the positive electrode active material may be or include a high nickel-based positive electrode active material having a nickel content that is greater than or equal to 80 mol%, greater than or equal to 85 mol%, greater than or equal to 90 mol%, greater than or equal to 91 mol%, greater than or equal to 94 mol%, or greater than or equal to 99 mol% based on 100 mol% of a metal excluding lithium in the lithium transition metal composite oxide. Such high-nickel-based positive electrode active materials can achieve high capacity and can be applied to high-capacity, high-density rechargeable lithium batteries.

The positive electrode active material may be formed of or include particles, and the average particle diameter (D₅₀) of the particles may be, for example, ≥ 1 µm to ≤ 30 µm. As an example, the positive electrode active material may be or include large particles with an average particle diameter (D₅₀) of ≥ 9 µm to ≤ 25 µm, or may be or include small particles with an average particle diameter (D₅₀) of ≥ 0.5 µm to ≤ 8 µm, and the large particles and small particles are appropriately mixed. The average particle diameter (D₅₀) of large particles may be, for example, ≥ 10 µm to ≤ 20 µm, or ≥ 12 µm to ≤ 18 µm, and the average particle diameter (D₅₀) of small particles may be, for example, ≥ 1 µm to ≤ 6 µm, or ≥ 2 µm to ≤ 5 µm. When the positive electrode active material includes a mixture of large and small particles, the large particles may be included in an amount of ≥ 60 wt% to ≤ 95 wt%, or ≥ 70 wt% to ≤ 90 wt%, and the small particles may be included in an amount of ≥ 5 wt% to ≤ 40 wt%, or ≥ 10 wt% to ≤ 30 wt%, based on a total of 100 wt% of the large and small particles. When large and small particles are mixed in the above content ranges, cycle-life characteristics can be improved while improving capacity and energy density. The average particle diameter (D₅₀) means a diameter of particles having a cumulative volume of 50 volume% in the particle size distribution that is obtained by measuring the size (diameter or major axis length) of about 20 particles at random in a scanning electron microscope image for positive electrode active materials.

The positive electrode active material may be included in an amount of ≥ 90 wt% to ≤ 99.8 wt%, or ≥ 95 wt% to ≤ 99 wt%, based on a total weight of the positive electrode active material layer.

The positive electrode active material layer according to some example embodiments may include a conductive material and may further include a binder.

The conductive material is included to provide electrode conductivity, and any electrically conductive material may be used as a conductive material unless the electrically conductive material causes chemical change to the positive electrode. Examples of the conductive material may include at least one of a carbon-based material such as graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The conductive material may be included in an amount of ≥ 0.01 wt% to ≤ 0.5 wt%, for example ≥ 0.01 wt% to ≤ 0.4 wt%, ≥ 0.01 wt% to ≤ 0.3 wt%, ≥ 0.01 wt% to ≤ 0.2 wt%, or ≥ 0.01 wt% to ≤ 0.1 wt% based on a total weight of the positive electrode active material layer. A positive electrode including a conductive material in any of the above content ranges can achieve high energy density by reducing the content of the conductive material, compared to a general positive electrode, while maintaining a low resistance by increasing electronic conductivity by a conductive layer that is described below.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The binder may be included in an amount of ≥ 0.1 wt% to ≤ 5 wt%, for example ≥ 0.1 wt% to ≤ 4.5 wt%, ≥ 0.1 wt% to ≤ 4 wt%, ≥ 0.1 wt% to ≤ 3.5 wt%, ≥ 0.1 wt% to ≤ 3 wt%, or ≥ 0.5 wt% to ≤ 2.5 wt% based on a total weight of the positive electrode active material layer.

The positive electrode according to some example embodiments may implement high energy density, and the density of the positive electrode active material layer may be ≥ 3.5 g/cc to ≤ 4.2 g/cc, for example, ≥ 3.5 g/cc to ≤ 4.1 g/cc, ≥ 3.5 g/cc to ≤ 4.0 g/cc, ≥ 3.5 g/cc to ≤ 3.9 g/cc, or ≥ 3.5 to ≤ 3.8 g/cc. When the density of the positive electrode active material layer is within any of the above ranges, a positive electrode having desired, improved or advantageous discharge capacity may be realized, the positive electrode having high energy density and high capacity, and challenges such as insufficient electrolyte impregnation, deterioration of high rate capability, active material particles being crushed, or the current collector becoming difficult to withstand and breaking during the process, are reduced or prevented.

The thickness of the positive electrode active material layer according to some example embodiments may be ≥ 20 µm to ≤ 400 µm, for example ≥ 30 µm to ≤ 300 µm, ≥ 50 µm to ≤ 200 µm, or ≥ 80 µm to ≤ 100 µm. Therefore, a ratio of a thickness of the current collector and a thickness of the positive electrode active material layer may be ≥ 1:5 to ≤ 1:30, for example, ≥ 1:6 to ≤ 1:25, ≥ 1:7 to ≤ 1:20, ≥ 1:8 to ≤ 1:15, or ≥ 1:9 to ≤ 1:12. When the thickness range of the positive electrode active material layer and the thickness ratio between the current collector and the positive electrode active material layer are within any of the above ranges, a positive electrode with high density may be manufactured, which has the advantage, among other advantages, of increasing the capacity of the positive electrode.

### Conductive Layer

The conductive layer included in the positive electrode according to some example embodiments may be located as a separate layer inside the positive electrode active material layer, and may include carbon nanotubes.

The positive electrode may have, for example, a structure including a current collector, a lower positive electrode active material layer located on the current collector and including a positive electrode active material and a first conductive material; a conductive layer located on the lower positive electrode active material layer and including carbon nanotube, and an upper positive electrode active material layer located on the conductive layer and including a positive electrode active material and a second conductive material. In examples, the positive electrode may have a structure where the current collector, the lower positive electrode active material layer, the conductive layer, and the upper positive electrode active material layer are laminated, e.g., sequentially laminated. In another example, the positive electrode may have a structure where the conductive layer is inserted between the positive electrode active material layer and the positive electrode active material layer. The conductive layer and the positive electrode active material layer may be further laminated, e.g., sequentially further laminated, on the upper positive electrode active material layer to introduce a plurality of conductive layers.

Conventionally, a conductive layer is provided between the current collector and the positive electrode active material layer or on the surface of the positive electrode active material layer, or carbon nanotubes are dispersed inside the positive electrode active material layer. However, these methods present difficulties in securing adherence of the conductive layer, and thus the conductive layer is separated in a battery, and furthermore when these methods are applied to a positive electrode active material layer with high conductivity or a high-power battery, a high-density battery, or a high-capacity battery, typically insufficiently ensure thermal stability.

In contrast to the above, the positive electrode according to some example embodiments provide advantages that include ensuring adherence and thermal stability of the conductive layer by introducing the conductive layer inside the positive electrode active material layer, and maintaining low resistance by increasing electronic conductivity as well as achieving high energy density by reducing the content of the conductive material.

The lower positive electrode active material layer according to example embodiments of the disclosure may have a thickness of ≥ 50 µm to ≤ 100 µm, for example, ≥ 55 µm to ≤ 100 µm, ≥ 60 µm to ≤ 100 µm, ≥ 65 µm to ≤ 95 µm, or ≥ 70 µm to 90 µm. In addition, the upper positive electrode active material layer may have a thickness of ≥ 50 µm to ≤ 100 µm, for example, ≥ 55 µm to ≤ 100 µm, ≥ 60 µm to ≤ 100 µm, ≥ 65 µm to ≤ 95 µm, or ≥ 70 µm to ≤ 90 µm. When the lower and upper positive electrode active material layers satisfy any of the above thickness ranges, high capacity may not only be achieved, but also the problem of deterioration of positive electrode active material particles according to repeated charging and discharging may be reduced or effectively prevented, thereby improving cycle-life characteristics of a battery.

The conductive layer may be substantially parallel to the current collector inside the positive electrode active material layer, and may be composed of or include one layer or a plurality of layers such as, e.g., ≥ 1 to ≤ 10 layers, ≥ 1 to ≤ 5 layers, or ≥ 1 to ≤ 3 layers. As the conductive layer is composed of ≥ 1 to ≤ 3 layers, the content of the conductive material may be reduced to increase electronic conductivity, and thus maintain low resistance as well as achieve high energy density and simultaneously have an advantage of easily disposition in terms of a process.

The conductive layer may be composed of or include a plurality of layers, wherein each conductive layer may have a thickness of ≥ 0.1 µm to ≤ 3.0 µm, for example, ≥ 0.2 µm to ≤ 3.0 µm, ≥ 0.3 µm to ≤ 2.5 µm, ≥ 0.4 µm to ≤ 2.0 µm, or ≥ 0.5 µm to ≤ 1.5 µm. When the conductive layer satisfies any of the above thickness ranges, electrons or ions have a sufficiently short movement distance in the conductive layer, exhibiting uniform battery performance and improving output characteristics.

A thickness ratio of the conductive layer to the positive electrode active material layer may be ≥ 0.0003 to ≤ 0.15, for example, ≥ 0.0005 to ≤ 0.1, ≥ 0.001 to ≤ 0.05, or ≥ 0.005 to ≤ 0.02. When the thickness ratio of the conductive layer to the positive electrode active material layer satisfies the ranges, energy density of the positive electrode may not only be increased, but also resistance may be effectively lowered.

When the plurality of the conductive layers are formed inside the positive electrode active material layer, a distance between the conductive layers may be ≥ 5 µm to ≤ 100 µm, for example, ≥ 10 µm to ≤ 80µm, or ≥ 30 µm to ≤ 50µm. When the distance between the conductive layers satisfies the ranges, such a distance is advantageous in terms of processibility, and while lowering resistance of the positive electrode, energy density may be improved.

The carbon nanotubes refer to a carbon allotrope in which one carbon atom is bonded with another carbon atom in a hexagonal, or other polyhedral, honeycomb pattern into a sheet, which forms a tube with a diameter at a nanometer level. The carbon nanotubes may be more easily dispersed in water than other conductive materials such as carbon black and the like to form a thin coating layer with an even coating surface, resultantly securing desired, improved or advantageous conductivity with a small amount thereof.

The carbon nanotubes may include single-walled carbon nanotubes, double-walled carbon nanotubes, multi-walled carbon nanotubes, or two or more thereof. The carbon nanotubes may have a length of ≥ 50 nm to ≤ 500 nm, for example, ≥ 50 nm to ≤ 400 nm, ≥ 50 nm to ≤ 300 nm, or ≥ 100 nm to ≤ 250 nm. In addition, the carbon nanotubes may have a diameter of ≥ 0.1 nm to ≤ 50 nm, for example, ≥ 0.2 nm to ≤ 40 nm, ≥ 0.5 nm to ≤ 30 nm, or ≥ 1 nm to ≤ 20 nm. For example, when the carbon nanotubes are single-walled carbon nanotubes, the carbon nanotubes may have a diameter of ≥ 0.4 nm to ≤ 2 nm, and when the carbon nanotubes are multi-walled carbon nanotubes, the carbon nanotubes may have a diameter of ≥ 10 nm to ≤ 20 nm.

The carbon nanotube may be included in an amount that is greater than or equal to 90% wt%, for example, for example ≥ 90 wt% to ≤ 99.9 wt%, for example ≥ 95 wt% to ≤ 99 wt%, or ≥ 96 wt% to ≤ 98 wt% based on a total 100 wt% of the conductive layer. When carbon nanotube in any of the above content ranges is included in the conductive layer, the carbon nanotube may be substantially dispersed and battery performance may be improved.

The conductive layer may further include a conductive material. For example, the conductive material included in the conductive layer, the first conductive material included in the lower positive electrode active material layer, and the second conductive material included in the upper positive electrode active material layer, may be the same as, or different, from one other. In an example, they may be the same as each other. Each, or one or more, of the first conductive material and the second conductive material, and the conductive material in the conductive layer may include a carbon material, a metal material, a metal carbide, a metal nitride, a metal silicide, or a combination thereof. The carbon material may be or include carbon black, graphite, a carbon fiber, or a combination thereof, the carbon black may include, for example, acetylene black, ketjen black, channel black, furnace black, lamp black, thermal black, or a combination thereof, and the graphite may include natural graphite, artificial graphite, or a combination thereof. The metal material may be or include metal particles such as at least one of nickel or a metal fiber. The metal carbide may include, for example, WC, B₄C, ZrC, NbC, MoC, TiC, TaC, or a combination thereof, the metal nitride may include TiN, ZrN, TaN, or a combination thereof, and the metal silicide may include, for example, WSi₂, MoSi₂ or a combination thereof.

The conductive material may be included in an amount of ≥ 0.1 wt% to ≤ 10 wt%, for example ≥ 0.5 wt% to ≤ 8 wt%, ≥ 1.0 wt% to ≤ 6 wt%, ≥ 1.5 wt% to ≤ 5 wt%, or ≥ 2 wt% to ≤ 4 wt% based on a total weight of the conductive layer. When the conductive material within any of the above content ranges is included in the conductive layer, the conductive layer may exhibit desired, improved or advantageous electrical conductivity.

The conductive layer may further include a binder.

The binder may play a role in adhering the materials in the conductive layer to each other and adhering the conductive layer between active material layers. The binder may be a water-insoluble binder, a water-soluble binder, or a combination thereof.

The water-insoluble binder may include polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

Examples of the water-soluble binder include a rubber-based binder or a polymer resin binder. The water-soluble binder may be or include an acrylic binder. The rubber-based binder may be or include a styrene-butadiene rubber (SBR), an acrylated styrene-butadiene rubber, an acrylonitrile-butadiene rubber (ABR), an acrylic rubber, a butyl rubber, a fluorine rubber, and a combination thereof. The polymer resin binder may be or include polyethylene oxide, polyvinylpyrrolidone, polyepichlorohydrin, polyphosphazene, polyacrylamide, poly(N-vinylformamide), polyacrylonitrile, ethylenepropylenedienecopolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The binder may be included in an amount of ≥ 0.1 wt% to ≤ 10 wt%, for example ≥ 0.5 wt% to ≤ 8 wt%, ≥ 1.0 wt% to ≤ 6 wt%, ≥ 1.5 wt% to ≤ 5 wt%, or ≥ 2 wt% to ≤ 4 wt% based on a total weight of the conductive layer. When the binder in any of the above content ranges is included in the conductive layer, the conductive layer can exhibit desired, improved or advantageous adhesion while maintaining desired, improved or advantageous performance.

The positive electrode according to some example embodiments may have a positive electrode resistance that is less than or equal to 8.50 Ω·cm, or an interface resistance between the positive electrode active material layer and the current collector may be less than or equal to 0.045 Ω·cm².

### Rechargeable Lithium Battery

In some example embodiments, a rechargeable lithium battery includes the positive electrode, a negative electrode, and an electrolyte. Herein, the electrolyte may be or include a liquid electrolyte or a solid electrolyte.

For example, in some example embodiments, a rechargeable lithium battery may include the aforementioned positive electrode, a negative electrode, a separator between the positive electrode and the negative electrode, and an electrolyte solution. As another example, an all-solid-state rechargeable battery may include the aforementioned positive electrode, a negative electrode, and a solid electrolyte layer between the positive electrode and the negative electrode.

Hereinafter, a rechargeable lithium battery using an electrolyte solution will be described as an example.

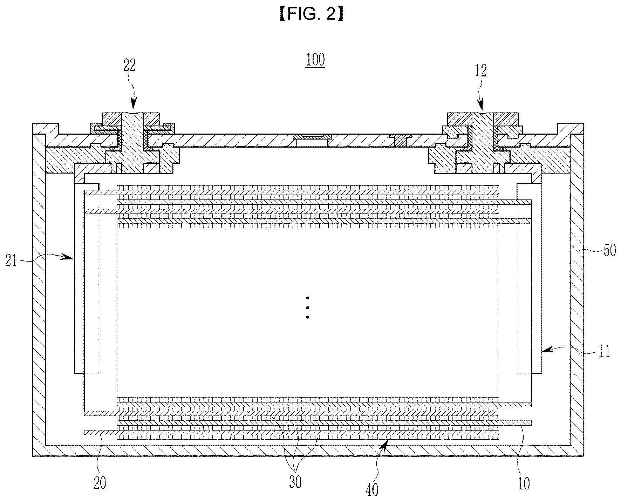

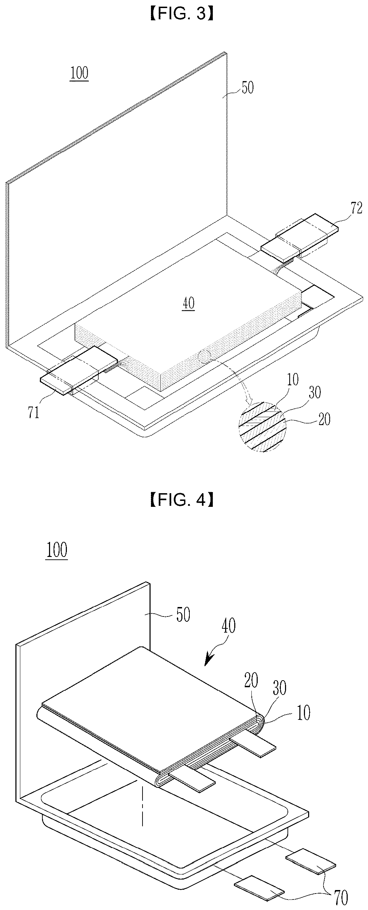

The rechargeable lithium battery may be classified into cylindrical, prismatic, pouch, coin, and the like, depending on the shape thereof. FIGS. 1 to 4 are schematic diagrams showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to some example embodiments may be rechargeable at a high voltage or may be suitable for being driven at a high voltage. For example, the charging voltage of a rechargeable lithium battery may be greater than or equal to 4.45 V, ≥ 4.45 V to ≤ 4.7 V, ≥ 4.45 V to ≤ 4.6 V, or ≥ 4.45 V to ≤ 4.55 V. The rechargeable lithium battery, to which the positive electrode according to some example embodiments is applied, may maintain a low resistance all over the electrode plate as well as high energy density, thereby realizing high capacity and improved cycle-life characteristics.

### Negative Electrode

The negative electrode may include a current collector and a negative electrode active material layer on the current collector. The negative electrode active material layer may include a negative electrode active material, and may further include a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, and a transition metal oxide.

The material that reversibly intercalates/deintercalates lithium ions may include, for example, at least one of crystalline carbon, amorphous carbon, and a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element including at least one of an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The Sn-based negative electrode active material may be or include Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, ≥ 0.5 µm to ≤ 20 µm. According to some example embodiments, the silicon-carbon composite may be formed of or include silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a content of silicon may be ≥ 10 wt% to ≤ 50 wt% and a content of amorphous carbon may be ≥ 50 wt% to ≤ 90 wt% based on 100 wt% of the silicon-carbon composite. In addition, when the composite includes silicon, amorphous carbon, and crystalline carbon, a content of silicon may be ≥ 10 wt% to ≤ 50 wt%, a content of crystalline carbon may be ≥ 10 wt% to ≤ 70 wt%, and a content of amorphous carbon may be ≥ 20 wt% to ≤ 40 wt% based on 100 wt% of the silicon-carbon composite.

Additionally, a thickness of the amorphous carbon coating layer may be ≥ 5 nm to ≤ 100 nm. An average particle diameter (D₅₀) of the silicon particles (primary particles) may be ≥ 10 nm to ≤ 1 µm, or ≥ 10 nm to ≤ 200 nm. The silicon particles may exist as silicon alone, in the form of a silicon alloy, or in an oxidized form. The oxidized form of silicon may be represented by SiOₓ (0<x≤2). At this time, the atomic content ratio of Si:O, which indicates a degree of oxidation, may be ≥ 99:1 to ≤ 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of ≥ 1:99 to ≤ 90:10.

### Binder

The binder serves to sufficiently adhere the negative electrode active material particles to each other, and also to adhere the negative electrode active material to the current collector. The binder may be or include a non-aqueous binder, an aqueous binder, a dry binder, or a combination thereof.

The non-aqueous binder may include at least polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include Na, K, or Li.

The dry binder may be a polymer material capable of becoming fiber, and may be or include, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless the electrically conductive material causes a chemical change. Examples of the conductive material include at least one of a carbon-based material such as natural graphite, artificial graphite, carbon black, acetylene black, ketjen black, a carbon fiber, a carbon nanofiber, a carbon nanotube, and the like, a metal-based material of a metal powder or a metal fiber including at least one of copper, nickel, aluminum silver, and the like, a conductive polymer including at least a polyphenylene derivative; or a mixture thereof.

A content of the negative electrode active material may be ≥ 95 wt% to ≤ 99.5 wt% based on 100 wt% of the negative electrode active material layer, and a content of the binder may be ≥ 0.5 wt% to ≤ 5 wt% based on 100 wt% of the negative electrode active material layer. For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

### Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of at least a foil, sheet, or foam. A thickness of the negative electrode current collector may be, for example, ≥ 1 µm to ≤ 20 µm, ≥ 5 µm to ≤ 15 µm, or ≥ 7 µm to ≤ 10 µm.

### Electrolyte

For example, the electrolyte for a rechargeable lithium battery may be or include an electrolyte, which may include a non-aqueous organic solvent and a lithium salt.

The non-aqueous organic solvent serves as a medium for transmitting ions taking part in the electrochemical reaction of a battery. The non-aqueous organic solvent may be or include a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include at least cyclohexanone, and the like. The alcohol-based solvent may include at least one of ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance.

When using a carbonate-based solvent, a cyclic carbonate and a chain carbonate may be mixed and used, and the cyclic carbonate and the chain carbonate may be mixed in a volume ratio of ≥ 1:1 to ≤ 1:9.

The non-aqueous organic solvent may further include an aromatic hydrocarbon-based organic solvent. For example, a carbonate-based solvent and an aromatic hydrocarbon-based organic solvent may be mixed and used in a volume ratio of ≥ 1:1 to ≤ 30:1.

The electrolyte may further include at least one of vinylethyl carbonate, vinylene carbonate, or an ethylene carbonate-based compound to, e.g., improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPFs, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of ≥ 0.1 M to ≤ 2.0 M. When the concentration of lithium salt is within the above range, the electrolyte has appropriate ionic conductivity and viscosity, and thus desired, improved or advantageous performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film including at least one of a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of ≥ 1 µm to ≤ 40 µm, for example, ≥ 1 µm to ≤ 30 µm, ≥ 1 µm to ≤ 20 µm, ≥ 5 µm to ≤ 15 µm, or ≥ 10 µm to ≤ 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be ≥ 1 nm to ≤ 2000 nm, for example, ≥ 100 nm to ≤ 1000 nm, or ≥ 100 nm to ≤ 700 nm.

The organic material and the inorganic material may be mixed in one coating layer, or a coating layer including an organic material and a coating layer including an inorganic material may be stacked.

The thickness of the coating layer may be ≥ 0.5 µm to ≤ 20 µm, for example, ≥ 1 µm to ≤ 10 µm, or ≥ 1 µm to ≤ 5 µm.

Examples and comparative examples of the present disclosure are described below. However, the following examples are only examples of the present disclosure, and the present disclosure is not limited to the following examples.

### Example 1

### (1) Manufacturing of Positive Electrode

98.1 wt% of LiNi_{0.8}Mn_{0.2}O₂ as a positive electrode active material, 1.5 wt% of polyvinylidene fluoride as a binder, and 0.4 wt% of carbon black as a conductive material were mixed in a solvent of N-methylpyrrolidone to prepare positive electrode active material slurry.

Conductive layer slurry was prepared by mixing 90 wt% of carbon nanotube with a length of 150 nm and a diameter of 10 nm, 5 wt% of carbon black, and 5 wt% of an acrylic binder.

The prepared positive electrode active material slurry was coated on an aluminum current collector and dried at 120°C for 10 minutes. Subsequently, the conductive layer slurry was coated on the positive electrode active material layer by using a micro gravure and dried. The positive electrode active material slurry was then coated again on the conductive layer and dried, so that the conductive layer is sandwiched between two positive electrode active material layers. The dried electrode plate was compressed to manufacture a positive electrode plate. In a cross-section of the compressed positive electrode, the lower positive electrode active material layer had a thickness of about 80 µm, the upper positive electrode active material layer had a thickness of about 80 µm, and the conductive layer had a thickness of about 1 µm.

### Example 2

A positive electrode was manufactured substantially in the same manner as in Example 1 with a difference that the conductive layer was composed of two layers by twice repeatedly coating and drying the conductive layer slurry on the positive electrode active material layer, wherein the content of the conductive material in the positive electrode active material slurry was changed to 0.2 wt%, and the content of the positive electrode active material was changed to 98.3 wt%. In other words, the positive electrode of Example 2 was formed by sequentially stacking the current collector, the positive electrode active material layer, the conductive layer, the positive electrode active material layer, the conductive layer, and the positive electrode active material layer. In a cross-section of the finally compressed positive electrode, the positive electrode active material layer had a total thickness of about 160 µm, and the conductive layer had a thickness of about 1 µm.

### Example 3

A positive electrode was manufactured substantially in the same manner as in Example 1 with a difference that the conductive layer was composed of three layers by three times repeatedly coating and drying the conductive layer slurry on the positive electrode active material layer, wherein the content of the conductive material in the positive electrode active material slurry was changed to 0.15 wt%, and the content of the positive electrode active material was changed to 98.35 wt%. In other words, the positive electrode of Example 3 was formed by sequentially stacking the current collector, the positive electrode active material layer, the conductive layer, the positive electrode active material layer, the conductive layer, the positive electrode active material layer, the conductive layer, and the positive electrode active material layer. In a cross-section of the finally compressed positive electrode, the positive electrode active material layer had a total thickness of about 160 µm, and the conductive layer had a thickness of about 1 µm.

### Comparative Example 1

A positive electrode was manufactured substantially in the same manner as in Example 1 with a difference that a process in which the conductive layer slurry was coated on the positive electrode active material layer and subsequently dried is not performed. In a cross-section of the finally compressed positive electrode, the positive electrode active material layer had a thickness of about 160 µm.

### Evaluation Example 1: Resistance Evaluation

The contents of the conductive materials in the positive electrode active material layers according to Examples 1 to 3 and Comparative Example 1 are shown in Table 1, and the positive electrodes according to Examples 1 to 3 and Comparative Example 1 were measured with respect to active mass resistance and interface resistance by using am electrode resistance meter (in-plane, Hioki E.E. Corp.), and the results are shown in Table 2. Herein, the active mass refers to the active material layers, the active mass resistance refers to volume resistance, and the interface resistance refers to contact resistance between positive electrode active material layer and current collector.

**Table 1**

| | Number of conductive layers | Content of conductive material in positive electrode active material layer (wt%) |
|---|---|---|
| Example 1 | 1 | 0.4 |
| Example 2 | 2 | 0.2 |
| Example 3 | 3 | 0.15 |
| Comparative Example 1 | - | 1.20 |

**(Table 2)**

| | Active mass resistance (Ω·cm) | Interface resistance (Ω·cm²) |
|---|---|---|
| Example 1 | 8.50 | 0.043 |
| Example 2 | 7.12 | 0.026 |
| Example 3 | 6.85 | 0.020 |
| Comparative Example 1 | 9.07 | 0.050 |

Referring to Tables 1 and 2, compared to Comparative Example 1 which did not include a conductive layer inside a positive electrode active material layer, Examples 1 to 3 which include the conductive layer inside the positive electrode active material layer turned out to exhibit low active mass resistance and interface resistance, even though the content of the conductive material in the positive electrode active material layer was reduced. In addition, Example 3 which includes three conductive layers inside the positive electrode active material layer, compared to Examples 1 and 2, exhibited low active mass resistance and interface resistance.

Such low interface resistance is understood to facilitate intercalation and deintercalation of lithium ions during the charging and discharging and significantly maintain charging/discharging efficiency (coulombic efficiency) and thus substantially improve battery capacity. In other words, Examples 1 to 3, which include the conductive layer inside the positive electrode active material layer, in particular, Example 3 which includes three conductive layers in the positive electrode active material layer, reduced the content of the conductive material in the positive electrode plate, thereby maintaining energy density, and simultaneously maintaining overall low resistance of the electrode plate.

### Evaluation Example 2: Energy Density Evaluation

After interposing a polytetrafluoroethylene separator between each of the positive electrodes according to Examples 1 to 3, Comparative Example 1 and a graphite negative electrode, an electrolyte solution prepared by dissolving 1 M LiPFs in a mixed solvent of ethylene carbonate and dimethyl carbonate in a volume ratio of 3:7 was injected thereinto to manufacture cells. The cells were charged and discharged at a rate of 0.2 C/0.2 C within a voltage range of 3.0 V to 4.45 V at 25°C to calculate energy density. The energy density was obtained according to Calculation Equation of {(average driving voltage (V) x capacity (Ah))/cell volume (m³)}, wherein the capacity was calculated as a product of positive electrode volume (cc) and discharge capacity (mAh/cc).

**(Table 3)**

| | Energy density (Wh/L) |
|---|---|
| Example 1 | 463 |
| Example 2 | 463 |
| Example 3 | 464 |
| Comparative Example 1 | 463 |

Referring to Table 3, Examples 1 to 3 realized equivalent or equal energy density to Comparative Example 1. Accordingly, the cells of Examples 1 to 3 improved energy density by reducing the content of the conductive material inside the positive electrode active material layer and simultaneously, effectively reduced resistance of the electrode plate by introducing such conductive layers.

While this invention has been described in connection with what is presently considered to be practical example embodiments, it is to be understood that the invention is not limited to the disclosed example embodiments. On the contrary, the invention is intended to cover various modifications and equivalent arrangements included within the spirit and scope of the appended claims.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10), comprising:
a current collector;
a positive electrode active material layer located on the current collector and including a positive electrode active material and a conductive material; and
a conductive layer located inside the positive electrode active material layer and including carbon nanotubes;
wherein the conductive material is included in an amount of ≥ 0.01 wt% to ≤ 0.5 wt% based on 100 wt% of the positive electrode active material layer.

2. The positive electrode (10) as claimed in claim 1, wherein
the positive electrode (10) comprises two or more positive electrode active material layers, and
the conductive layer is sandwiched between two positive electrode active material layers.

3. The positive electrode (10) as claimed in claim 1 or 2, wherein
the positive electrode (10) comprises single conductive layer, or a plurality of conductive layers, preferably wherein the positive electrode (10) comprises one to three conductive layers, and also preferred wherein the positive electrode (10) comprises 1 to 10 conductive layers.

4. The positive electrode (10) as claimed in any one of claims 1 to 3, wherein the conductive layer has a thickness of ≥ 0.1 µm to ≤ 3.0 µm.

5. The positive electrode (10) as claimed in any one of claims 1 to 4, wherein the positive electrode active material layer has a thickness of ≥ 20 µm to ≤ 400 µm.

6. The positive electrode (10) as claimed in any one of claims 1 to 5, wherein a ratio of a thickness of the conductive layer to a thickness of the positive electrode active material layer is ≥ 0.0003 to ≤ 0.15.

7. The positive electrode (10) as claimed in any one of claims 1 to 6, wherein the conductive layer comprises a plurality of conductive layers within the positive electrode active material layer, at least one of the plurality of conductive layers has a thickness of ≥ 0.1 µm to ≤ 3.0 µm, and a gap between adjacent conductive layers is ≥ 5 µm to ≤ 100 µm.

8. The positive electrode (10) as claimed in any one of claims 1 to 7, wherein the carbon nanotube is included in an amount of ≥ 90 wt% to ≤ 99.9 wt% based on a total 100 wt% of the conductive layer.

9. The positive electrode (10) as claimed in any one of claims 1 to 8, wherein
a length of the carbon nanotubes is ≥ 50 nm to 500 nm, and
a diameter of the carbon nanotubes is ≥ 0.1 nm to ≤ 50 nm.

10. The positive electrode (10) as claimed in any one of claims 1 to 9, wherein
the conductive material comprises one of a carbon-based material, a metal-based material, a conductive polymer, and a combination thereof; or wherein
the conductive material comprises one of graphite, carbon black, acetylene black, ketjen black, and a combination thereof.

11. The positive electrode (10) as claimed in any one of claims 1 to 10, wherein
the positive electrode active material comprises a lithium transition metal composite oxide, and the lithium transition metal composite oxide is represented by one of Chemical Formula 1, Chemical Formula 2, and Chemical Formula 3:
[Chemical Formula 1] Liₐ₁Niₓ₁M¹_{y1}M²_{z1}O_{2-b1}X_{b1}
wherein, in Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements including Al, B, Ba, Ca, Ce, Co, Cr, Cu, Fe, Mg, Mn, Mo, Nb, Si, Sn, Sr, Ti, V, W, and Zr, and X is one or more elements including F, P, and S;
[Chemical Formula 2] Liₐ₂Coₓ₂M³_{y2}O_{2-b2}X_{b2}
wherein, in Chemical Formula 2, 0.9≤a2≤1.8, 0.7≤x2≤1, 0≤y2≤0.3, 0.9≤x2+y2≤1.1, and 0≤b2≤0.1, M³ is one or more elements including Al, B, Ba, Ca, Ce, Cr, Cu, Fe, Mg, Mn, Mo, Ni, Se, Si, Sn, Sr, Ti, V, W, Y, Zn, and Zr, and X is one or more elements including F, P, and S;
[Chemical Formula 3] Liₐ₃Feₓ₃M⁴_{y3}PO_{4-b3}X_{b3}
wherein, in Chemical Formula 3, 0.9≤a3≤1.8, 0.6≤x3≤1, 0≤y3≤0.4, and 0≤b3≤0.1, M⁴ is one or more elements including Al, B, Ba, Ca, Ce, Co, Cr, Cu, Mg, Mn, Mo, Ni, Se, Si, Sn, Sr, Ti, V, W, Y, Zn, and Zr, and X is one or more elements including F, P, and S.

12. The positive electrode (10) as claimed in any one of claims 1 to 11,wherein the positive electrode active material layer comprises:
a lower positive electrode active material layer located on the current collector and including the positive electrode active material and a first conductive material;
wherein the conductive layer is located on the lower positive electrode active material layer; and
an upper positive electrode active material layer located on the conductive layer and including the positive electrode active material and a second conductive material;
preferably wherein the first conductive material and the second conductive material are a same material; and/or
preferably wherein a thickness of the lower positive electrode active material layer is ≥ 50 µm to ≤ 100 µm,
a thickness of the upper positive electrode active material layer is ≥ 50 µm to ≤ 100 µm, and
a thickness of the conductive layer is ≥ 0.1 µm to ≤ 3.0 µm.

13. The positive electrode (10) as claimed in any one of claims 1 to 12, wherein
the positive electrode active material layer has a density of ≥ 3.5 g/cc to ≤ 4.2 g/cc.

14. The positive electrode (10) as claimed in any oner of claims 1 to 13, wherein
a positive electrode resistance thereof is less than or equal to 8.50 Ω·cm, and
an interface resistance between the positive electrode active material layer and the current collector is less than or equal to 0.045 Ω·cm².

15. A rechargeable lithium battery (100), comprising
the positive electrode (10) as claimed in any one of claims 1 to 14;
a negative electrode (20); and
an electrolyte.
